# EUROPEAN PATENT SPECIFICATION

(11) **EP 0 919 027 B1**
(45) Date of publication and mention of the grant of the patent: **07.09.2005**
(21) Application number: 96925322.8
(22) Date of filing: 16.07.1996
(51) Int. Cl.: G06F 9/38

(54) **A DELAYED UPDATE REGISTER FOR AN ARRAY**
VERZÖGERTES AKTUALISIERUNGSREGISTER FÜR MATRIX
REGISTRE D'ACTUALISATION RETARDEE POUR MATRICE

(43) Date of publication of application: 02.06.1999
(73) Proprietor: ADVANCED MICRO DEVICES, INC., Austin, TX 78741 (US)
(72) Inventor: TRAN, Thang, M., Austin, TX 78730 (US); WITT, David, B., Austin, TX 78730 (US)
(74) Representative: Brookes Batchellor
(86) International application number: PCT/US1996/011756
(87) International publication number: WO 1998/002800

(56) References cited:
- FR-A- 2 674 044
- US-A- 5 394 530
- US-A- 5 440 717
- US-A- 5 454 117

## Description

### BACKGROUND OF THE INVENTION

### 1. Field of the Invention

This invention relates to update mechanisms for storage arrays on an integrated circuit and more particularly to an update mechanism for a branch prediction array embodied on a superscalar microprocessor.

### 2. Description of the Relevant Art

Integrated circuits are groups of transistors employed on a single monolithic substrate. The groups of transistors embody various functions for a system (for example, a computer system). One particular example of an integrated circuit is a superscalar microprocessor which embodies multiple instruction processing pipelines. Integrated circuits typically have a clock input associated with them, which defines a "clock cycle". A clock cycle is an interval of time in which the functions embodied on the integrated circuit complete a portion of their tasks (a "subfunction"). At the end of a clock cycle, the results are moved to the next function or subfunction which operates on the value.

Integrated circuits may employ arrays for storing information useful to the embodied functions. For example, data and instruction caches are arrays that are commonly employed within superscalar microprocessors. As used herein, the term "array" means a plurality of storage locations configured into a structure from which the values stored in one or more of the plurality of storage locations may be selected for manipulation. Arrays are configured with one or more input ports which allow functions to access information stored in the array. Each input port may be associated with an output port. A particular input port may allow read access, write access, or read/write access to storage locations within the array and is referred to as a read port, a write port, or a read/write port, respectively. A read access is an access in which the value in the selected storage location is transferred to the associated output port and the storage location is left unchanged. A write access is an access in which the value in the selected storage location is changed to a value provided with the input port. A port which allows read/write access allows either a read or a write access to occur. Ports which allow write accesses typically are associated with a write data input port. The write data input port conveys the data to be stored at the address provided on the write port.

"Indexes" are often used to select a storage location within an array. An index is a value which indicates which of the plurality of storage locations of an array that a particular access intends to manipulate. The act of selecting one of a plurality of storage locations according to an index is called "indexing". In one particular example, a set associative cache has an index which identifies which group of sets to access and a "way value" which selects one of the sets within the selected group for manipulation.

In many cases, more than one access to an array in a given clock cycle may be desirable for the functions an integrated circuit embodies. An array which allows two accesses per clock cycle is referred to as "dual-ported". Each port may allow a read access, a write access, or a read/write access. Unfortunately, dual-ported arrays are much larger than single ported arrays, often occupying more than double the silicon area of a single ported array which stores the same amount of information.

One particularly useful dual-ported array is an array in which one port allows a read access while a second (write) port updates a storage location with new information. Arrays that are configured in this way do not block a read access with an update, which simplifies array control logic and may improve performance. An example of an array configured with a read port and a write port for updates is a branch prediction array associated with a branch prediction unit of a superscalar microprocessor. The branch prediction array stores information related to past branch predictions. A fetch address is used to index into the branch prediction array, and the information read from the array is used to create a branch prediction associated with the instructions residing at the fetch address. When a branch instruction is mispredicted, then the correct address is fetched and new prediction information is calculated. The new prediction information should be stored into the branch prediction array in a storage location indexed by the address of the mispredicted branch instruction. Then, the next time the branch instruction is fetched, a correct prediction may be made. The new prediction information is available to update the branch prediction array in the clock cycle following the cycle in which the correct address is fetched. However, the clock cycle that the update is available is also a clock cycle in which a fetch address is presented to the branch prediction unit. Therefore, a read port for the fetch address and a write port for the update would be useful for the branch prediction array, but the silicon area cost for the dual-ported array is relatively large. A mechanism which achieves the effects of a dual-ported array with a read port and a write port without the associated silicon area penalty is desired.

### SUMMARY OF THE INVENTION

Reference is also made to US Patent specification 5,394,390. This discloses a technique for predicting a branch target address using a branch history table (BHT). The BHT stores a plurality of pairs of a branch address and corresponding branch target address. In order to eliminate or effectively reduce loss of machine cycles in the branch target address prediction, a prefetched address data is compared with an incoming new branch instruction address before being applied to a BHT (branch history table) for the purpose of updating same. When the coincidence is detected, a selector selects a new branch target address before being applied to the BHT. The selected new branch target address is fed to an instruction address prefetch register.

The present invention provides an update unit for updating a single ported branch prediction array, said single ported branch prediction array having an address input, a data input, and a data output on a superscalar microprocessor characterized by:
an update storage device for storing branch prediction update information for said branch prediction array wherein said update storage device is coupled to said data input of said branch prediction array, wherein said update information includes an update address, wherein said branch prediction update information is stored in said update storage device during at least one clock cycle subsequent to said update unit receiving a signal indicating a predicted branch instruction is mispredicted, and wherein said at least one clock cycle is prior to a subsequent idle clock cycle;
an input selection device having a first input coupled to said storage device, a second input coupled to a functional array input bus for conveying instruction fetch addresses, and an output coupled to said address input of said branch prediction array, said input selection device being arranged to selectively couple said first or second input to said branch prediction array address input, wherein said subsequent idle clock cycle is defined as a first clock cycle when said functional array input bus does not convey an instruction fetch address and;
an output selection device coupled to said data output of said branch prediction array and further coupled to said update storage device wherein said output selection device is configured to select between said data output of said branch prediction array and said update storage device to convey a value from either said branch prediction array or said update storage device.

The present invention also provides a method for delayed update of a branch prediction array on a superscalar microprocessor, characterized by:
storing branch prediction update information for said branch prediction array in a storage device wherein said branch prediction update information includes an update address, wherein said branch prediction update information is stored in said storage device during at least one clock cycle subsequent to determining that a predicted branch instruction is mispredicted, and wherein said at least one clock cycle is prior to a subsequent idle clock cycle; and
updating said branch prediction array during said subsequent clock cycle, wherein said subsequent clock cycle is defined as a first clock cycle in which an instruction address is not conveyed to said branch prediction array;
selecting between the branch prediction array and the storage device to forward information stored in the branch prediction array or branch prediction update information stored the storage device.

The problems outlined above are in large part solved by an integrated circuit employing an update unit for an array according to the present invention. The update unit delays the update of the array until a clock cycle in which the functional input to the array is idle. The input port normally used by the functional input is then used to perform the update. During clock cycles between receiving the update and storing the update into the array, the update unit compares the current functional input address to the update address. If the current functional input address matches the update address, then the update value is provided as the output of the array. Otherwise, the information stored in the indexed storage location is provided. In this manner, the update appears to have been performed in the clock cycle that the update value was received, as in the dual-ported array. However, the second port has been advantageously removed. A large amount of silicon area may be saved.

A particular embodiment of the update unit is a branch prediction array update unit. This embodiment collects the update prediction information for each misprediction or external fetch. When a fetch address is presented for branch prediction, the fetch address is compared to the update address stored in the update unit. If the addresses match, then the update prediction information is forwarded as the output of the array. If the addresses do not match, then the information stored in the indexed storage location is forwarded as the output of the array. When the next external fetch begins or misprediction is detected, the update is written into the branch prediction array.

This embodiment allows a microprocessor to update branch prediction information speculatively. This functionality is desirable because modem microprocessors allow out-of-order execution of instructions, including branch instructions. Out-of-order instructions are generally executed speculatively, meaning that the instruction execution is not known to be needed by the sequential execution of the program. An instruction may be executed speculatively, for example, if it is on the path that is the target of a predicted branch instruction which has not yet executed. An instruction becomes non-speculative when each instruction previous to it is guaranteed to execute, and therefore that instruction is guaranteed to execute. If updates were written directly into the array, then speculatively updating the branch prediction information would skew the information with incorrect data. Correct prediction rates might suffer. However, by placing the update information in the update unit, a speculative update may occur. If the next branch misprediction is for a branch instruction that is prior to the branch instruction associated with the current update information, the current update information is discarded instead of being written into the branch prediction array. Performance may be increased by advantageously updating branch prediction information speculatively but being able to discard the information if the branch is not to be executed.

### BRIEF DESCRIPTION OF THE DRAWINGS

Other objects and advantages of the invention will become apparent upon reading the following detailed description and upon reference to the accompanying drawings in which:
Figure 1 is a block diagram of a superscalar microprocessor embodying the present invention in a branch prediction unit.
Figure 2 is a diagram of an instruction cache and the branch prediction unit of Figure 1, depicting one embodiment of the present invention.
Figure 3 is a timing diagram showing one set of events occuring with respect to the embodiment shown in Figure 2, illustrating the delayed update mechanism for the branch prediction array for two consecutive mispredicted branches.
Figure 4 is a timing diagram showing another set of events occurring with respect to the embodiment shown in Figure 2, illustrating the delayed update mechanism for a mispredicted branch followed by an instruction cache miss.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives failing within the spirit and scope of the present invention as defined by the appended claims.

### DETAILED DESCRIPTION OF THE INVENTION

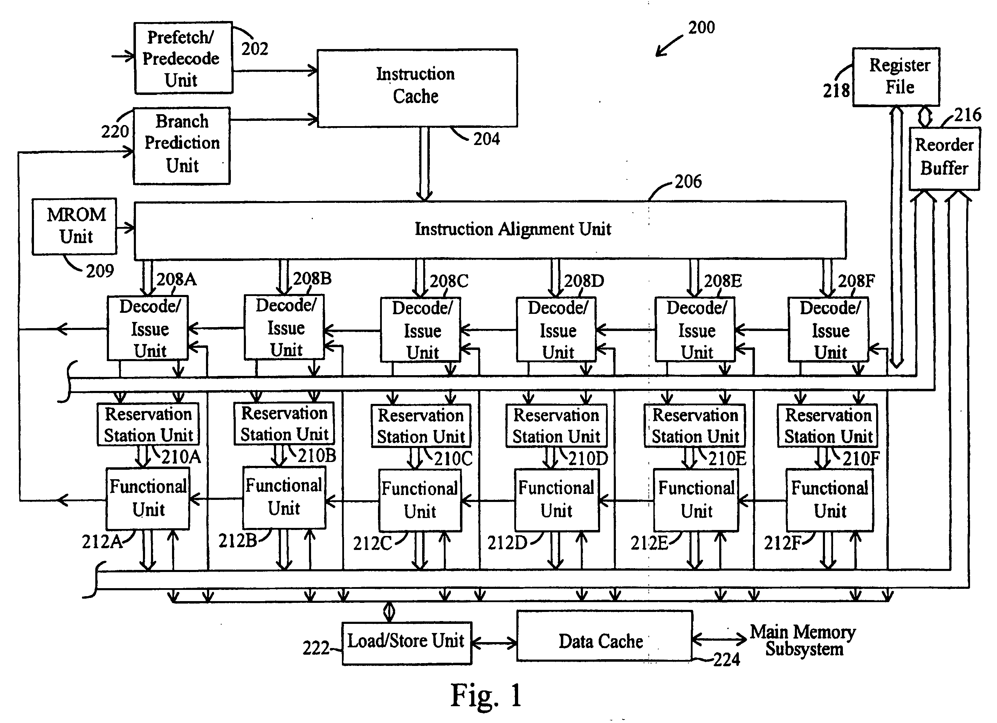

Turning now to Figure 1, a block diagram of a superscalar microprocessor 200 including a branch prediction unit 220 in accordance with the present invention is shown. As illustrated in the embodiment of Figure 1, superscalar microprocessor 200 includes a prefetch/predecode unit 202 and a branch prediction unit 220 coupled to an instruction cache 204. Instruction alignment unit 206 is coupled between instruction cache 204 and a plurality of decode units 208A-208F (referred to collectively as decode units 208). Each decode unit 208A-208F is coupled to respective reservation station units 210A-210F (referred to collectively as reservation stations 210), and each reservation station 210A-210F is coupled to a respective functional unit 212A-212F (referred to collectively as functional units 212). Decode units 208, reservation stations 210, and functional units 212 are further coupled to a reorder buffer 216, a register file 218 and a load/store unit 222. A data cache 224 is finally shown coupled to load/store unit 222, and an MROM unit 209 is shown coupled to instruction alignment unit 206.

Generally speaking, instruction cache 204 is a high speed cache memory provided to temporarily store instructions prior to their dispatch to decode units 208. In one embodiment, instruction cache 204 is configured to cache up to 32 kilobytes of instruction code organized in lines of 16 bytes each (where each byte consists of 8 bits). During operation, instruction code is provided to instruction cache 204 by prefetching code from a main memory (not shown) through prefetch/predecode unit 202. It is noted that instruction cache 204 could be implemented in a set-associative, a fully-associative, or a direct-mapped configuration.

Prefetch/predecode unit 202 is provided to prefetch instruction code from the main memory for storage within instruction cache 204. In one embodiment, prefetch/predecode unit 202 is configured to burst 64-bit wide code from the main memory into instruction cache 204. It is understood that a variety of specific code prefetching techniques and algorithms may be employed by prefetch/predecode unit 202.

As prefetch/predecode unit 202 fetches instructions from the main memory, it generates three predecode bits associated with each byte of instruction code: a start bit, an end bit, and a "functional" bit. The predecode bits form tags indicative of the boundaries of each instruction. The predecode tags may also convey additional information such as whether a given instruction can be decoded directly by decode units 208 or whether the instruction must be executed by invoking a microcode procedure controlled by MROM unit 209, as will be described in greater detail below.

Table 1 indicates one encoding of the predecode tags. As indicated within the table, if a given byte is the first byte of an instruction, the start bit for that byte is set. If the byte is the last byte of an instruction, the end bit for that byte is set. If a particular instruction cannot be directly decoded by the decode units 208, the functional bit associated with the first byte of the instruction is set. On the other hand, if the instruction can be directly decoded by the decode units 208, the functional bit associated with the first byte of the instruction is cleared. The functional bit for the second byte of a particular instruction is cleared if the opcode is the first byte, and is set if the opcode is the second byte. It is noted that in situations where the opcode is the second byte, the first byte is a prefix byte. The functional bit values for instruction byte numbers 3-8 indicate whether the byte is a MODRM or an SIB byte, or whether the byte contains displacement or immediate data.

**Table 1.**

| Encoding of Start. End and Functional Bits | | | | |
|---|---|---|---|---|
| Instr. Byte Number | Start Bit Value | End Bit Value | Functional Bit Value | Meaning |
| 1 | 1 | X | 0 | Fast decode |
| 1 | 1 | X | 1 | MROM instr. |
| 2 | 0 | X | 0 | Opcode is first byte |
| 2 | 0 | X | 1 | Opcode is this byte, first byte is prefix |
| 3-8 | 0 | X | 0 | Mod R/M or SIB byte |
| 3-8 | 0 | X | 1 | Displacement or immediate data; the second functional bit set in bytes 3-8 indicates immediate data |
| 1-8 | X | 0 | X | Not last byte of instruction |
| 1-8 | X | 1 | X | Last byte of instruction |

As stated previously, in one embodiment certain instructions within the x86 instruction set may be directly decoded by decode unit 208. These instructions are referred to as "fast path" instructions. The remaining instructions of the x86 instruction set are referred to as "MROM instructions". MROM instructions are executed by invoking MROM unit 209. More specifically, when an MROM instruction is encountered, MROM unit 209 parses and serializes the instruction into a subset of defined fast path instructions to effectuate a desired operation. A listing of exemplary x86 instructions categorized as fast path instructions as well as a description of the manner of handling both fast path and MROM instructions will be provided further below.

Instruction alignment unit 206 is provided to channel variable byte length instructions from instruction cache 204 to fixed issue positions formed by decode units 208A-208F. Instruction alignment unit 206 independently and in parallel selects instructions from three groups of instruction bytes provided by instruction cache 204 and arranges these bytes into three groups of preliminary issue positions. Each group of issue positions is associated with one of the three groups of instruction bytes. The preliminary issue positions are then merged together to form the final issue positions each of which is coupled to one of decode units 208.

Before proceeding with a detailed description of the branch prediction array update mechanism within branch prediction unit 220, general aspects regarding other subsystems employed within the exemplary superscalar microprocessor 200 of Figure 1 will be described. For the embodiment of Figure 1, each of the decode units 208 includes decoding circuitry for decoding the predetermined fast path instructions referred to above. In addition, each decode unit 208A-208F routes displacement and immediate data to a corresponding reservation station unit 210A-210F. Output signals from the decode units 208 include bit-encoded execution instructions for the functional units 212 as well as operand address information, immediate data and/or displacement data.

The superscalar microprocessor of Figure 1 supports out of order execution, and thus employs reorder buffer 216 to keep track of the original program sequence for register read and write operations, to implement register renaming, to allow for speculative instruction execution and branch misprediction recovery, and to facilitate precise exceptions. As will be appreciated by those of skill in the art, a temporary storage location within reorder buffer 216 is reserved upon decode of an instruction that involves the update of a register to thereby store speculative register states. Reorder buffer 216 may be implemented in a first-in-first-out configuration wherein speculative results move to the "bottom" of the buffer as they are validated and written to the register file, thus making room for new entries at the "top" of the buffer. Other specific configurations of reorder buffer 216 are also possible, as will be described further below. If a branch prediction is incorrect, the results of speculatively-executed instructions along the mispredicted path can be invalidated in the buffer before they are written to register file 218.

The bit-encoded execution instructions and immediate data provided at the outputs of decode units 208A-208F are routed directly to respective reservation station units 210A-210F. In one embodiment, each reservation station unit 210A-210F is capable of holding instruction information (i.e., bit encoded execution bits as well as operand values, operand tags and/or immediate data) for up to three pending instructions awaiting issue to the corresponding functional unit. It is noted that for the embodiment of Figure 1, each decode unit 208A-208F is associated with a dedicated reservation station unit 210A-210F, and that each reservation station unit 210A-210F is similarly associated with a dedicated functional unit 212A-212F. Accordingly, six dedicated "issue positions" are formed by decode units 208, reservation station units 210 and functional units 212. Instructions aligned and dispatched to issue position 0 through decode unit 208A are passed to reservation station unit 210A and subsequently to functional unit 212A for execution. Similarly, instructions aligned and dispatched to decode unit 208B are passed to reservation station unit 210B and into functional unit 212B, and so on.

Upon decode of a particular instruction, if a required operand is a register location, register address information is routed to reorder buffer 216 and register file 218 simultaneously. Those of skill in the art will appreciate that the x86 register file includes eight 32 bit real registers (i.e., typically referred to as EAX, EBX, ECX, EDX, EBP, ESI, EDI and ESP). Reorder buffer 216 contains temporary storage locations for results which change the contents of these registers to thereby allow out of order execution. A temporary storage location of reorder buffer 216 is reserved for each instruction which, upon decode, is determined to modify the contents of one of the real registers. Therefore, at various points during execution of a particular program, reorder buffer 216 may have one or more locations which contain the speculatively executed contents of a given register. If following decode of a given instruction it is determined that reorder buffer 216 has a previous location or locations assigned to a register used as an operand in the given instruction, the reorder buffer 216 forwards to the corresponding reservation station either: 1) the value in the most recently assigned location, or 2) a tag for the most recently assigned location if the value has not yet been produced by the functional unit that will eventually execute the previous instruction. If the reorder buffer has a location reserved for a given register, the operand value (or tag) is provided from reorder buffer 216 rather than from register file 218. If there is no location reserved for a required register in reorder buffer 216, the value is taken directly from register file 218. If the operand corresponds to a memory location, the operand value is provided to the reservation station unit through load/store unit 222.

Details regarding suitable reorder buffer implementations may be found within the publication "Superscalar Microprocessor Design" by Mike Johnson, Preatice-Hall, Eaglewood Cliffs, New Jersey, 1991, and within US Patent 5 751 981.

Reservation station units 210A-210F are provided to temporarily store instruction information to be speculatively executed by the corresponding functional units 212A-212F. As stated previously, each reservation station unit 210A-210F may store instruction information for up to three pending instructions. Each of the six reservation stations 210A-210F contain locations to store bit-encoded execution instructions to be speculatively executed by the corresponding functional unit and the values of operands. If a particular operand is not available, a tag for that operand is provided from reorder buffer 216 and is stored within the corresponding reservation station until the result has been generated (i.e., by completion of the execution of a previous instruction). It is noted that when an instruction is executed by one of the functional units 212A-212F, the result of that instruction is passed directly to any reservation station units 210A-210F that are waiting for that result at the same time the result is passed to update reorder buffer 216 (this technique is commonly referred to as "result forwarding"). Instructions are issued to functional units for execution after the values of any required operand(s) are made available. That is, if an operand associated with a pending instruction within one of the reservation station units 210A-210F has been tagged with a location of a previous result value within reorder buffer 216 which corresponds to an instruction which modifies the required operand, the instruction is not issued to the corresponding functional unit 212 until the operand result for the previous instruction has been obtained. Accordingly, the order in which instructions are executed may not be the same as the order of the original program instruction sequence. Reorder buffer 216 ensures that data coherency is maintained in situations where read-after-write dependencies occur.

In one embodiment, each of the functional units 212 is configured to perform integer arithmetic operations of addition and subtraction, as well as shifts, rotates, logical operations, and branch operations. It is noted that a floating point unit (not shown) may also be employed to accommodate floating point operations.

Each of the functional units 212 also provides information regarding the execution of conditional branch instructions to the branch prediction unit 220. If a branch prediction was incorrect branch prediction unit 220 flushes instructions subsequent to the mispredicted branch that have entered the instruction processing pipeline, and causes prefetch/predecode unit 202 to fetch the required instructions from instruction cache 204 or main memory. It is noted that in such situations, results of instructions in the original program sequence which occur after the mispredicted branch instruction are discarded, including those which were speculatively executed and temporarily stored in load/store unit 222 and reorder buffer 216. Exemplary configurations of suitable branch prediction mechanisms are well known.

Results produced by functional units 212 are sent to the reorder buffer 216 if a register value is being updated, and to the load/store unit 222 if the contents of a memory location is changed. If the result is to be stored in a register, the reorder buffer 216 stores the result in the location reserved for the value of the register when the instruction was decoded. As stated previously, results are also broadcast to reservation station units 210A-210F where pending instructions may be waiting for the results of previous instruction executions to obtain the required operand values.

Generally speaking, load/store unit 222 provides an interface between functional units 212A-212F and data cache 224. In one embodiment, load/store unit 222 is configured with a load/store buffer with eight storage locations for data and address information for pending loads or stores. Decode units 208 arbitrate for access to the load/store unit 222. When the buffer is full, a decode unit must wait until the load/store unit 222 has room for the pending load or store request information. The load/store unit 222 also performs dependency checking for load instructions against pending store instructions to ensure that data coherency is maintained.

Data cache 224 is a high speed cache memory provided to temporarily store data being transferred between load/store unit 222 and the main memory subsystem. In one embodiment, data cache 224 has a capacity of storing up to eight kilobytes of data. It is understood that data cache 224 may be implemented in a variety of specific memory configurations, including a set associative configuration.

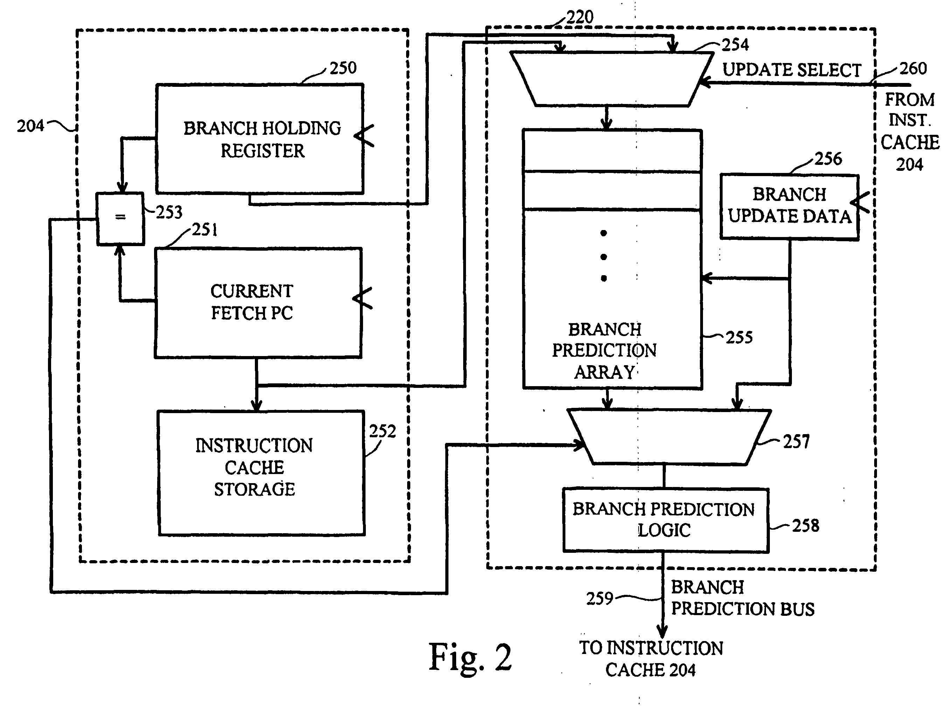

Turning now to Figure 2, a diagram of instruction cache 204 and branch prediction unit 220 is shown. Instruction cache 204 includes a branch holding register 250, a current fetch PC register 251, and an instruction cache storage array 252. Current fetch PC register 251 contains the current fetch address and indexes into instruction storage array 252 to fetch instructions. Both fetch PC register 251 and branch holding register 250 are coupled to a comparator 253 and an input multiplexor 254 within branch prediction unit 220. Input multiplexor 254 is coupled to a read/write input port of a branch prediction array 255. Coupled to a write data port of branch prediction array 255 is branch update data register 256. Both the output of branch prediction array 255 and branch update data register 256 are coupled to an output multiplexor 257 which receives its select line from comparator 253. Output multiplexor 257 is coupled to a branch prediction logic block 258, which manipulates the data transferred by output multiplexor 257 and produces a branch prediction which is conveyed to instruction cache 204 on a branch prediction bus 259. Therefore, the output of multiplexor 257 is considered to be the output of branch prediction array 255. Instruction cache 204 stores the address conveyed on branch prediction bus 259 in the current fetch PC register unless a branch misprediction or exception is indicated by reorder buffer 216.

Generally speaking, branch holding register 250, branch update data register 256, input multiplexor 254 and output multiplexor 257 provide a mechanism by which a delayed update of branch prediction array 255 may be made. The address of the branch instruction which was mispredicted is stored in branch holding register 250, and the associated branch prediction data is stored in branch update data register 256. Input multiplexor 254 is an input selection device for branch prediction array 255, and is used to select the current fetch PC address for branch prediction processing or the branch holding register to provide the update to branch prediction array 255. Therefore, the current fetch PC address is selected for reading only and the branch holding register is selecting for writing only. In this way, branch prediction array 255 may be single ported while still effectively providing the simultaneous read and update function of the dual-ported array. Instead of performing the update immediately, the update is delayed until a cycle in which the current fetch PC register is invalid. However, the update information is made visible via comparator 253 and output multiplexor 257. Comparator 253 compares the addresses stored in current fetch PC register 251 and branch holding register 250. Output multiplexor 257 is an output selection device which selects the output of branch prediction array 255 if comparator 253 indicates not equal and selects the branch update data register if comparator 253 indicates equal. Therefore, if the branch instruction whose correct prediction information is held in branch update data register 256 is refetched before the update is written to branch prediction array 255, the correct prediction information will be processed.

As mentioned above, branch holding register 250 stores the address of the last mispredicted branch instruction until an opportunity to update branch prediction array 255 occurs. Branch update data register 256 stores the branch prediction data associated with the address stored in branch holding register 250. Together, branch update data register 256 and branch holding register 250 form an update storage device that allows a branch prediction update to be stored until a convenient clock cycle in which to perform the update to branch prediction array 255. In one embodiment, an update occurs the clock cycle following another mispredicted branch detection by reorder buffer 216 and the clock cycle when an external instruction fetch is started in response to an instruction cache miss. Instruction cache 204 detects such clock cycles and causes an update select line 260 to convey a signal to input multiplexor 254 indicating that branch holding register 250 should be selected to access branch prediction array 255. In clock cycles in which the above mentioned events are not detected, the current fetch PC is selected to access branch prediction array 255 such that branch predictions are provided for each instruction fetch.

The clock cycle following a branch misprediction detection by reorder buffer 216 is a clock cycle in which the current fetch PC is invalid because the corrected address provided by reorder buffer 216 (or one of functional units 212) is a logical address. The logical address is converted to a linear address before accessing instruction cache 204. As will be appreciated by those skilled in the art, branch instruction execution in the x86 architecture produces a logical (or virtual) address. The logical address is translated first to a linear address and then to a physical address as detailed in the publication "Programming the 80386" by John H. Crawford, et al, Sybex, Inc. San Francisco, California, 1987. This publication is incorporated herein by reference in its entirety. In an embodiment of microprocessor 200, instruction cache 204 stores instructions based on their linear address. Therefore, the update update occurs during a clock cycle in which current fetch PC register 251 cannot access branch prediction array 255, and so the update is performed with no performance penalty.

Similarly, when an external fetch is started, the current fetch PC contains an address that need not access the branch prediction array. The instructions associated with the current fetch PC address will not be available until they are returned from external memory, typically at least several clock cycles. The branch prediction information will be determined from the instructions fetched, and so branch prediction array 255 need not be accessed. Therefore, the update occurs during a clock cycle in which current fetch PC register 251 does not need access to branch prediction array 255. Branch holding register 250 and branch update data register 256 are also used to hold predecoded branch prediction information produced by prefetch/predecode unit 202 when instructions are being fetched into instruction cache 204 from main memory. The update to branch prediction array 255 when an external fetch is started allows prefetch/predecode unit 202 access to branch holding register 250 and branch update data register 256.

In one embodiment, branch update data register 256 stores the successor index, branch counters, the byte position within the cache line of the branch instruction, and a way value associated with the branch address in branch holding register 250. The successor index includes the index bits for instruction cache 204 of the branch prediction for the branch instruction. The branch counters are counters associated with the branch prediction mechanisms employed by microprocessor 200. Any suitable branch prediction mechanism may be employed, and various branch prediction mechanisms are well-known. The way value recorded is the way of instruction cache 204 in which the corrected fetch address is stored.

Branch prediction array 255 is, in one embodiment, a linear array of storage locations which store the information stored in branch update data register 256. In one embodiment, two fields of data in the form stored in branch update data register 256 are stored and branch prediction array 255 is configured with 2048 entries. Branch prediction logic block 258 chooses one of the two fields from an indexed storage location according to the branch prediction mechanism implemented by microprocessor 200. When updating branch prediction array 255, one of the two fields stored in a the storage location indexed by the branch instruction address is replaced by the update information. If the update is due to a misprediction with respect to an address stored within branch prediction array 255, then the mispredicted address is updated with the corrected prediction information. If the branch was not detected at prediction time or was predicted not taken, then the field that predicts a non-taken branch is replaced by the new information. A bit for each field is sent along with the predicted branch instruction and returned by reorder buffer 216 along with the misprediction indication and corrected fetch address. The bit indicates when set that the corresponding field predicts a taken branch. The bit indicates when cleared that the corresponding field predicts a non-taken branch. This information is used to select a non-taken branch for replacement with the new information. If both addresses stored in a particular entry are predicted taken, then a pseudo-random selection policy is used for the replacement. In one embodiment, the pseudo-random policy is to select an entry to replace based on the least significant bit of the corrected fetch address. If the bit is set, the second entry is replaced. If the bit is clear, the first entry is replaced.

It is noted that the branch holding register and branch update data may be used to allow out of order update of branch prediction information without disturbing the contents of the branch prediction array. If a branch instruction is executed speculatively and mispredicted, it may be written into the branch prediction register and the branch update data register. On the next misprediction, the new misprediction is checked to see if it is prior to the speculatively stored misprediction. If the new misprediction is prior to the speculative misprediction, the branch holding register and branch update data register are invalidated and not written into the branch prediction array. Instead, the new misprediction data overwrites the previously stored misprediction data. If the new misprediction is not prior to the speculative misprediction, the speculative misprediction data is correct and the new misprediction information is not written into the branch holding register at this time. Speculative misprediction results are held in the branch holding register until they are indicated to be non-speculative by reorder buffer 216. Then they may be written into the branch prediction array at the next misprediction or external fetch.

It is further noted that the information stored in branch update data register 256 may vary from embodiment to embodiment, as may the information stored in branch prediction array 255 and the size of branch prediction array 255. It is also noted that, although the input selection device is represented by input multiplexor 254, the input selection device may vary from embodiment to embodiment. Specifically, multiple multiplexor devices may form the input selection device. Similarly, the output selection device may vary from embodiment to embodiment.

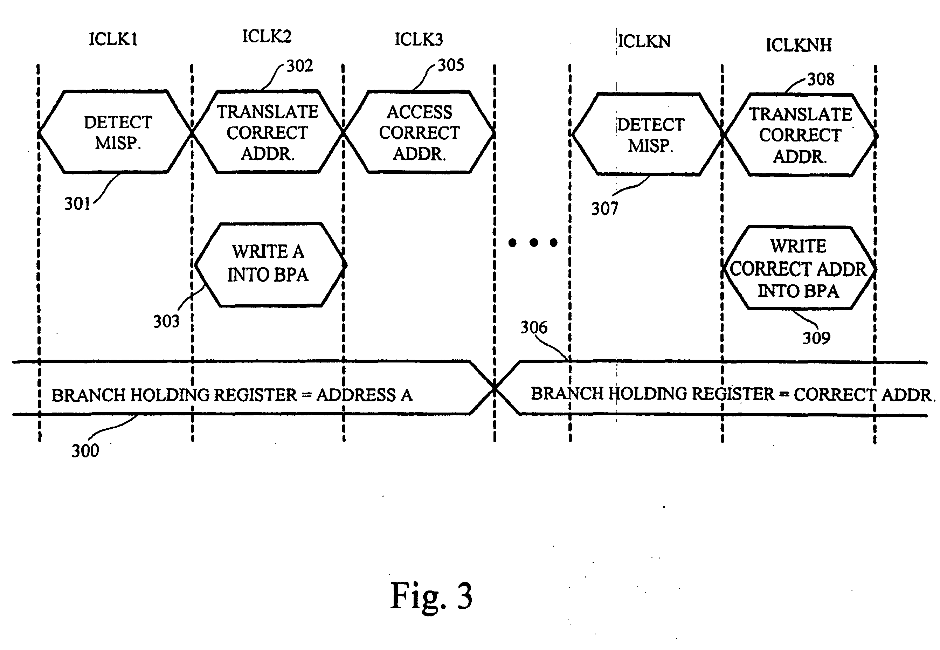

Turning now to Figure 3, a timing diagram illustrates the clock cycles during which branch prediction array 255, branch holding register 250, and branch update data register 256 are updated for the case of two consecutive mispredicted branches. In ICLK1, branch holding register 250 contains an address A as shown in block 300, and branch update data register 256 contains the update data associated with address A. Address A is a misprediction or external fetch address detected in a clock cycle prior to ICLK 1. In ICLK1, reorder buffer 216 indicates that a misprediction has been detected, as shown in block 301. The corrected fetch address associated with the mispredicted branch instruction is conveyed to instruction cache 204. In ICLK2, a signal on update select line 260 indicates that the branch history register should be selected by input multiplexor 254. While the instruction cache translates the logical corrected address to a linear address (as indicated by block 302 in Figure 3), address A and its associated branch prediction information are written into branch prediction array 255 (as indicated by block 303 where "BPA" is an abbreviation for branch prediction array). In ICLK3, the corrected address has been translated to a linear address and accesses instruction cache 204 and branch prediction array 255, as indicated by block 305. The way value of instruction cache 204 storing the instructions associated with the corrected address is stored in branch update data register 256. In ICLK4 and subsequent clock cycles, branch holding register 250 and branch update data register 256 contain the corrected fetch address and associated branch prediction data, respectively (as indicated by block 306). Later, in ICLKN, another branch misprediction is detected as indicated by block 307. In ICLKN-1, similar to ICLX2, the new address ("Corrected Addr2") is translated to a linear address and the corrected address currently stored in branch holding register 250 ("Corrected Addr") is written into the branch prediction array (as indicated by blocks 308 and 209, respectively).

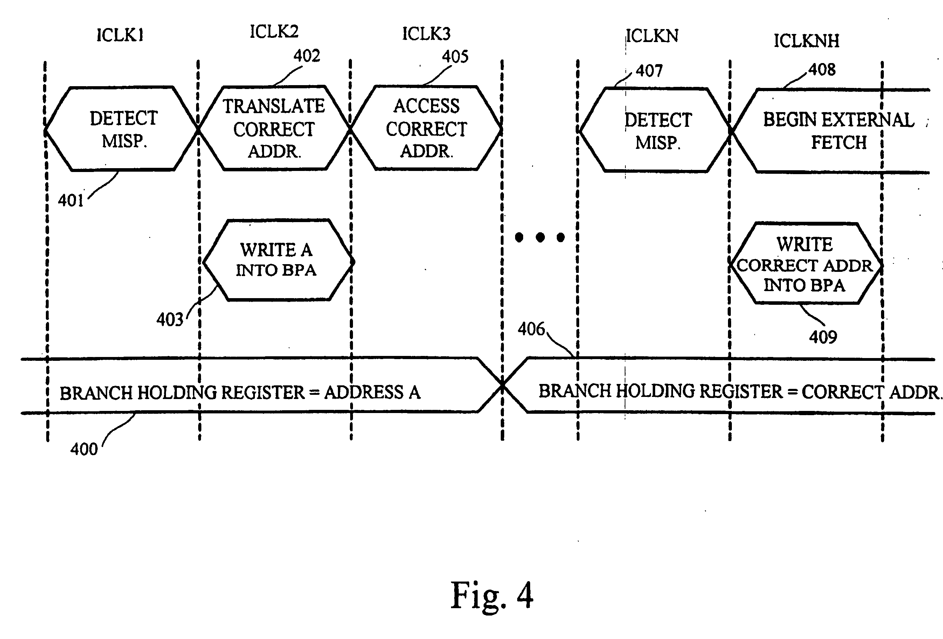

Turning now to Figure 4, a second timing diagram depicts a misprediction followed by an external fetch to further illustrate operation of the branch holding register. Similar to Figure 4, branch holding register 250 contains an address A as shown in block 400, and branch update data register 256 contains the update data associated with address A. In ICLK1, reorder buffer 216 indicates that a misprediction has been detected, as shown in block 401. In ICLK2, a signal on update select line 260 indicates that the branch history register should be selected by input multiplexor 254. While instruction cache 204 translates the logical corrected address to a linear address (as indicated by block 402 in Figure 4), address A and its associated branch prediction information are written into branch prediction array 255 (as indicated by block 403). In ICLK3, the corrected address has been translated to a linear address and accesses instruction cache 204 and branch prediction array 255, as indicate by block 405. The way value of instruction cache 204 storing the instructions associated with the corrected address is stored in branch update data register 256. In ICLK4 and subsequent clock cycles, branch holding register 250 and branch update data register 256 contain the corrected fetch address and associated branch prediction data, respectively (as indicated by block 406). Later, in ICLKN, instruction cache 204 detects an instruction cache miss (as indicated by block 407). In ICLKN-1, an external fetch begins (as indicated by block 408) and the corrected fetch address from the previous misprediction is written into branch prediction array 255 (as indicated by block 409). In a later clock cycle (not shown) the external fetch data arrives and predecoding is performed. When a branch instruction is predecoded, the predecoded information and branch address are stored in branch update data register 256 and branch holding register 250, respectively, until the next misprediction is detected or until the next external fetch begins.

As can be seen from the above timing diagrams, external fetches and branch mispredictions may occur in any order. Each time one of the two events occurs, the data associated with the previous event is written into the branch prediction array. The data associated with the new event is written into the branch holding register and branch update data register.

It is noted that aspects regarding instruction cache 204 are described within US Patent 5 623,619

In accordance with the above disclosure an update mechanism for a branch prediction array is described which allows updates to be delayed, eliminating a dual-port array in favor of a single port array for the branch prediction array. A large amount of silicon area may therefore be saved, at little cost in complexity of operation of the array. It is noted that, although this embodiment describes the delayed update mechanism in terms of a branch prediction array, many other applications of this mechanism exist. It is further specifically contemplated that this mechanism may be adapted to any dual-ported array included on an integrated circuit in which one of the ports is used for updating the array.

Numerous variations and modifications will become apparent to those skilled in the art once the above disclosure is fully appreciated. It is intended that the following claims be interpreted to embrace all such variations and modifications.

## Claims

1. An update unit for updating a single-ported branch prediction array, said single ported branch prediction array having an address input, a data input, and a data output on a superscalar microprocessor **characterized by**:
an update storage device (250, 256) for storing branch prediction update information for said branch prediction array (255) wherein said update storage device is coupled to said data input of said branch prediction array, wherein said update information includes an update address, wherein said branch prediction update information is stored in said update storage device during at least one clock cycle subsequent to said update unit receiving a signal indicating a predicted branch instruction is mispredicted, and wherein said at least one clock cycle is prior to a subsequent idle clock cycle;
an input selection device (254) having a first input coupled to said storage device (250, 256), a second input coupled to a functional array input bus for conveying instruction fetch addresses, and an output coupled to said address input of said branch prediction array (255), said input selection device (254) being arranged to selectively couple said first or second input to said branch prediction array address input, wherein said subsequent idle clock cycle is defined as a first clock cycle when said functional array input bus does not convey an instruction fetch address and;
an output selection device (257) coupled to said data output of said branch prediction array and further coupled to said update storage device wherein said output selection device is configured to select between said data output of said branch prediction array and said update storage device to convey a value from either said branch prediction array or said update storage device.

2. The update unit as recited in claim 1 wherein said input selection device comprises a multiplexer (254) and a multiplexer select signal line (260), wherein said multiplexer select signal line is configured to convey a signal which selects said update address stored in said update storage device during said subsequent idle clock cycle.

3. The update unit as recited in claim 1 wherein said output selection device comprises a multiplexer (257) and a multiplexer select signal line, wherein said multiplexer select signal line is configured to convey a signal which causes said output selection device to select said data output of said branch prediction array during a clock cycle in which said functional array input bus is selected by said input selection device.

4. The update unit as recited in claim 1 further comprising a comparator circuit, wherein said comparator circuit (253) is configured to compare said update address to said instruction fetch address, wherein said comparator circuit is coupled to said output selection device, and wherein said comparator circuit is further configured to cause said output selection device to select said update information during a clock cycle in which said comparator circuit detects that said update address is equal to said fetch address.

5. A method for delayed update of a branch prediction array on a superscalar microprocessor, **characterized by**:
storing branch prediction update information for said branch prediction array (255) in an update storage device (250, 256) wherein said branch prediction update information includes an update address, wherein said branch prediction update information is stored in said storage device during at least one clock cycle subsequent to determining that a predicted branch instruction is mispredicted, and wherein said at least one clock cycle is prior to a subsequent idle clock cycle; and
updating said branch prediction array (255) during said subsequent idle clock cycle, wherein said subsequent idle clock cycle is defined as a first clock cycle in which an instruction address is not conveyed to said branch prediction array;
selecting between the branch prediction array and the storage device to forward information stored in the branch prediction array or branch prediction update information stored the storage device.

6. The method as recited in claim 5 further comprising identifying said subsequent idle clock cycle.

7. The method as recited in claim 5 further comprising comparing an instruction address to said update address.

8. The method as recited in claim 7 further comprising forwarding said branch prediction update information as an output of said branch prediction array when said comparing step indicates equality.

9. The method as recited in claim 7 further comprising forwarding information stored within a storage location which is indexed by said instruction address as an output of said branch prediction array during a second clock cycle in which said comparing step indicates inequality.

10. The method as recited in claim 5 wherein said branch prediction update information is speculative and wherein said updating step occurs after said branch prediction update information becomes non-speculative.

## Revendications

1. Unité de mise à jour pour mettre à jour une matrice de prédiction de branchement mono-accès, ladite matrice de prédiction de branchement mono-accès ayant une entrée d'adresses, une entrée de données et une sortie de données sur un microprocesseur superscalaire **caractérisé par** :
un dispositif de mémorisation de mise à jour (250, 256) pour mémoriser des informations de mise à jour de prédiction de branchement pour ladite matrice de prédiction de branchement (255) dans laquelle ledit dispositif de mémorisation de mise à jour est couplé à ladite entrée de données de ladite matrice de prédiction de branchement, dans laquelle lesdites informations de mise à jour comprennent une adresse de mise à jour, dans laquelle lesdites informations de mise à jour de prédiction de branchement sont mémorisées dans ledit dispositif de mémorisation de mise à jour pendant au moins un cycle d'horloge subséquent à la réception, par ladite unité de mise à jour, d'un signal indiquant une mauvaise prédiction d'une instruction de branchement prédite, et dans laquelle ledit cycle d'horloge précède un cycle d'horloge d'attente subséquent ;
un dispositif de sélection d'entrées (254) ayant une première entrée couplée audit dispositif de mémorisation (250, 256), une deuxième entrée couplée à un bus d'entrée de matrice fonctionnelle pour transporter les adresses d'instructions extraites, et une sortie couplée à ladite entrée d'adresses de ladite matrice de prédiction de branchement (255), ledit dispositif de sélection d'entrées (254) étant conçu pour coupler de manière sélective ladite première ou seconde entrée à ladite entrée d'adresses de matrice de prédiction de branchement, où ledit cycle d'horloge d'attente est défini comme un premier cycle d'horloge lorsque ledit bus d'entrée de matrice fonctionnelle ne transporte pas une adresse d'instructions extraite et ;
un dispositif de sélection de sortie (257) couplé à ladite sortie de données de ladite matrice de prédiction de branchement et couplé en outre audit dispositif de mémorisation de mise à jour où ledit dispositif de sélection de sortie est configuré pour choisir entre ladite sortie de données de ladite matrice de prédiction de branchement et ledit dispositif de mémorisation de mise à jour pour transporter une valeur provenant soit de ladite matrice de prédiction de branchement soit dudit dispositif de mémorisation de mise à jour.

2. Unité de mise à jour selon la revendication 1, dans laquelle ledit dispositif de sélection d'entrées comprend un multiplexeur (254) et une ligne de signaux de sélection de multiplexeur (260), dans laquelle ladite ligne de signaux de sélection de multiplexeur est configurée pour transporter un signal qui sélectionne ladite adresse de mise à jour mémorisée dans ledit dispositif de mémorisation de mise à jour pendant ledit cycle d'horloge d'attente subséquent.

3. Unité de mise à jour selon la revendication 1, dans laquelle ledit dispositif de sélection de sortie comprend un multiplexeur (257) et une ligne de signaux de sélection de multiplexeur, dans laquelle ladite ligne de signaux de sélection de multiplexeur est configurée pour transporter un signal qui entraîne la sélection, par ledit dispositif de sélection de sortie, de ladite sortie de données de ladite matrice de prédiction de branchement pendant un cycle d'horloge dans laquelle ledit bus d'entrée de matrice fonctionnelle est sélectionné par ledit dispositif de sélection d'entrée.

4. Unité de mise à jour selon la revendication 1, comprenant en outre un circuit comparateur, dans lequel ledit circuit comparateur (253) est configuré pour comparer ladite adresse de mise à jour à ladite adresse d'instructions extraite, dans laquelle ledit circuit comparateur est couplé audit dispositif de sélection de sortie, et dans laquelle ledit circuit comparateur est en outre configuré pour que ledit dispositif de sélection de sortie sélectionne lesdites informations de mise à jour pendant un cycle d'horloge dans laquelle ledit circuit comparateur détecte que ladite adresse de mise à jour est égale à ladite adresse extraite.

5. Procédé de mise à jour retardée d'une matrice de prédiction de branchement sur un microprocesseur superscalaire, **caractérisé par** :
la mémorisation des informations de mise à jour de prédiction de branchement pour ladite matrice de prédiction de branchement (255) dans un dispositif de mémorisation de mise à jour (250, 256), dans lequel lesdites informations de mise à jour de prédiction de branchement comprennent des adresses de mise à jour, dans lequel lesdites informations de mise à jour de prédiction de branchement sont mémorisées dans ledit dispositif de mémorisation pendant au moins un cycle d'horloge subséquent à la détermination d'une mauvaise prédiction d'une instruction de branchement prédite, et dans lequel ledit cycle d'horloge est antérieur à un cycle d'horloge d'attente subséquent ; et
la mise à jour de ladite matrice de prédiction de branchement (255) pendant ledit cycle d'horloge d'attente subséquent, dans lequel ledit cycle d'horloge d'attente subséquent est défini comme un premier cycle d'horloge dans lequel une adresse d'instruction n'est pas transportée vers ladite matrice de prédiction de branchement ;
la sélection entre la matrice de prédiction de branchement et le dispositif de mémorisation pour transférer les informations mémorisées dans la matrice de prédiction de branchement ou les informations de mise à jour de prédiction de branchement mémorisées dans le dispositif de mémorisation.

6. Procédé selon la revendication 5, comprenant en outre l'identification dudit cycle d'horloge d'attente subséquent.

7. Procédé selon la revendication 5, comprenant en outre la comparaison d'une adresse d'instruction à ladite adresse de mise à jour.

8. Procédé selon la revendication 7, comprenant en outre le transfert desdites informations de mise à jour de prédiction de branchement sous forme d'une sortie de ladite matrice de prédiction de branchement lorsque ladite étape de comparaison indique une égalité.

9. Procédé selon la revendication 7, comprenant en outre le transfert des informations mémorisées à l'intérieur d'un emplacement de mémorisation qui est indexé par ladite adresse d'instruction sous forme d'une sortie de ladite matrice de prédiction de branchement pendant un deuxième cycle d'horloge dans lequel ladite étape de comparaison indique une inégalité.

10. Procédé selon la revendication 5, dans lequel ladite information de mise à jour de prédiction de branchement est spéculative et dans lequel ladite étape de mise à jour survient après que ladite information de mise à jour de prédiction de branchement est devenue non-spéculative.

## Patentansprüche

1. Update-Einheit zum Aktualisieren eines Einzelport-Verzweigungsvorhersage-Array, das einen Adresseneingang, einen Dateneingang und einen Datenausgang auf einem superskalaren Prozessor aufweist, **gekennzeichnet durch**:
eine Update-Speichervorrichtung (250,256) zum Speichern von Verzweigungsvorhersage-Update-Informationen für das Verzweigungsvorhersage-Array (255), wobei die Update-Speichervorrichtung mit dem Dateneingang des Verzweigungsvorhersage-Array gekoppelt ist, die Update-Informationen eine Update-Adresse enthalten, die Verzweigungsvorhersage-Update-Informationen in der Update-Speichervorrichtung gespeichert sind, und zwar während mindestens eines Taktzyklus im Anschluss an das Empfangen eines Signals **durch** die Update-Einheit, welches anzeigt, dass ein vorhergesagter Verzweigungsbefehl falsch vorhergesagt worden ist, und wobei der mindestens eine Taktzyklus dem anschließenden freien Taktzyklus vorausgeht;
eine Eingangs-Selektionsvorrichtung (254) mit einem ersten Eingang, der mit der Speichervorrichtung (250,256) gekoppelt ist, einem zweiten Eingang, der mit einem Funktions-Array-Eingangs-Bus zum Weiterleiten von Befehlsabrufadressen gekoppelt ist, und einem Ausgang, der mit dem Adresseneingang des Verzweigungsvorhersage-Array (255) gekoppelt ist, wobei die Eingangs-Selektionsvorrichtung (254) zum selektiven Koppeln des ersten oder des zweiten Eingangs mit dem Verzweigungsvorhersage-Array-Adresseneingang vorgesehen ist, wobei der anschließende freie Taktzyklus als ein erster Taktzyklus definiert ist, wenn der Funktions-Array-Eingangs-Bus keine Befehlsabrufadresse weiterleitet; und
eine Ausgangs-Selektionsvorrichtung (257), die mit dem Datenausgang des Verzweigungsvorhersage-Array und ferner mit der Update-Speichervorrichtung gekoppelt ist, wobei die Ausgangs-Selektionsvorrichtung zum Selektieren zwischen dem Datenausgang des Verzweigungsvorhersage-Array und der Update-Speichervorrichtung vorgesehen ist, um einen Wert entweder von dem Verzweigungsvorhersage-Array oder der Update-Speichervorrichtung weiterzuleiten.

2. Update-Einheit nach Anspruch 1, bei der die Eingangs-Selektionsvorrichtung einen Multiplexer (254) und eine Multiplexer-Selektions-Signal-leitung (260) aufweist, die zum Weiterleiten eines Signals vorgesehen ist, welches die Update-Adresse selektiert, die während des anschließenden freien Taktzyklus in der Update-Speichervorrichtung gespeichert ist.

3. Update-Einheit nach Anspruch 1, bei der die Ausgangs-Selektionsvorrichtung einen Multiplexer (257) und eine Multiplexer-Selektions-Signalleitung aufweist, die zum Weiterleiten eines Signals vorgesehen ist, welches bewirkt, dass die Ausgangs-Selektionsvorrichtung den Datenausgang des Verzweigungsvorhersage-Array während eines Taktzyklus selektiert, bei dem der Funktions-Array-Eingangs-Bus von der Eingangs-Selektionsvorrichtung selektiert wird.

4. Update-Einheit nach Anspruch 1, ferner mit einer Komparatorschaltung (253), die zum Vergleichen der Update-Adresse mit der Befehlsabrufadresse vorgesehen ist und die mit der Ausgangs-Selektionsvorrichtung gekoppelt ist, wobei die Komparatorschaltung ferner bewirkt, dass die Ausgangs-Selektionsvorrichtung die Update-Informationen während eines Taktzyklus selektiert, bei dem die Komparatorschaltung detektiert, dass die Update-Adresse der Abrufadresse gleich ist.

5. Verfahren zum verzögerten Aktualisieren eines Verzweigungsvorhersage-Array in einem superskalaren Mikroprozessor, **gekennzeichnet durch**:
Speichern von Verzweigungsvorhersage-Update-Informationen für das Verzweigungsvorhersage-Array (255) in einer Update-Speichervorrichtung (250,256), wobei die Verzweigungsvorhersage-Update-Informationen eine Update-Adresse enthalten und in der Speichervorrichtung gespeichert sind, und zwar während mindestens eines Taktzyklus im Anschluss an das Feststellen, dass ein vorhergesagter Verzweigungsbefehl falsch vorhergesagt worden ist, und wobei der mindestens eine Taktzyklus dem anschließenden freien Taktzyklus vorausgeht;
Aktualisieren des Verzweigungsvorhersage-Array (255) während eines anschließenden freien Taktzyklus, der als ein erster Taktzyklus definiert ist, bei dem keine Befehlsabrufadresse an das Verzweigungsvorhersage-Array weitergeleitet wird;
Selektieren zwischen dem Verzweigungsvorhersage-Array und der Speichervorrichtung, um in dem Verzweigungsvorhersage-Array gespeicherte Informationen oder in der Speichervorrichtung gespeicherte Verzweigungsvorhersage-Update-Informationen weiterzuleiten.

6. Verfahren nach Anspruch 5, ferner mit dem Identifizieren des anschließenden freien Taktzyklus.

7. Verfahren nach Anspruch 5, ferner mit dem Vergleichen einer Befehlsadresse mit der Update-Adresse.

8. Verfahren nach Anspruch 7, ferner mit dem Weiterleiten der Verzweigungsvorhersage-Update-Informationen als Ausgangssignal des Verzweigungsvorhersage-Array, wenn der Vergleichsschritt Gleichheit anzeigt.

9. Verfahren nach Anspruch 7, ferner mit dem Weiterleiten von an einem Speicherplatz gespeicherten Informationen, die von der Befehlsadresse als Ausgangssignal des Verzweigungsvorhersage-Array schrittweise weitergeleitet werden, und zwar in einem zweiten Taktzyklus, bei dem der Vergleichsschritt Ungleichheit anzeigt.

10. Verfahren nach Anspruch 5, bei dem die Verzweigungsvorhersage-Update-Informationen spekulativ sind und der Update-Schritt erfolgt, nachdem die Verzweigungsvorhersage-Update-Informationen nicht-spekulativ geworden sind.
